(19) Europäisches Patentamt

European Patent Office

Office européen des brevets

(11) EP 0 718 797 B1

(12) EUROPEAN PATENT SPECIFICATION

(45) Date of publication and mention
of the grant of the patent:
26.02.2003 Bulletin 2003/09

(51) Int Cl.⁷: G06T 15/20

(21) Application number: 95309215.2

(22) Date of filing: 19.12.1995

(54) **Perspective correction of texture in graphics by adaptive approximation**

Korrektur der Perspektive von Texturen in graphischen Bildern durch adaptive Approximation

Correction de perspective des textures d'images graphiques par approximation adaptive

(84) Designated Contracting States:
DE GB SE

(30) Priority: 19.12.1994 US 358284

(43) Date of publication of application:
26.06.1996 Bulletin 1996/26

(73) Proprietor: SUN MICROSYSTEMS, INC.
Mountain View, CA 94043 (US)

(72) Inventor: Donovan, Walter E.
Milpitas, California 95036 (US)

(74) Representative: W.P. Thompson & Co.
Coopers Building,
Church Street
Liverpool L1 3AB (GB)

(56) References cited:
US-A- 5 307 450

• EUROGRAPHICS, 4 - 8 September 1989,
AMSTERDAM, pages 257-268, XP000132231

## Description

The present invention relates to the field of computer graphics.

More particularly, the present invention relates to the field of texture mapping by approximation.

The application is related to US-A-5 812 141 entitled "A Method and Apparatus for an Adaptive Textural Mapping Controller", by Yakov Kamen and Uma Sabada, and assigned to Sun Microsystems Inc.

The above mentioned U.S. patent includes a general background discussion on computer graphics and texture mapping. As such, this background section will focus on conventional texture mapping with perspective correction, methods for implementing the same, and their disadvantages.

Most conventional computer graphics systems include a display device for displaying a two dimensional image represented as a bit mapped array of evenly spaced pixels. Each pixel has a pixel value and is uniquely identified by an X-axis and a Y-axis coordinate value pair. This Cartesian X-Y coordinate representation is compatible with the majority of graphics display devices whose images are composed of a plurality of scan lines along the X-axis, e.g., cathode ray tubes (CRTs) and active/passive liquid crystal displays (LCDs).

Conventionally, texture is defined as a modulation of color, intensity, surface normal, transparency or other surface property applied to a surface of a graphics object in such a way that the pattern appears attached to the surface as the viewpoint and perspective varies. In order to realistically display three dimensional objects in a high quality two dimensional image on the display device, a perspectively correct texture mapping value, called a texel value, is generated for each pixel to modify the pixel values of the image.

Mathematical models have been employed to provide excellent image quality but they tend to be computationally intensive and very demanding of the processor on the computer graphics system. Typically, the generation of texel values include two divisional computations or their equivalent for each pixel of the image for computing the perspective correction. As is well known in the computer arts, divisional computations typically take a fairly large number of clock cycles, even when the processor is equipped with hardware dedicated to performing divisional computations. With powerful processors, such as a SPARC based processor, computing two divisions per pixel in real-time is possible but the resulting texture computations will limit the processor's ability to simultaneously support other processes. In the less powerful processors, such as Intel's 80486 SX microprocessor, real-time texture value computations requiring the two divisions per pixel can overwhelm the processor. Hence it is highly desirable to lower the computational requirements for generating a high quality perspectively corrected texture map. Typical conventional approaches reduce the total number of division computations by substituting linear interpolation for pixels at predetermined intervals between accurately computed division points.

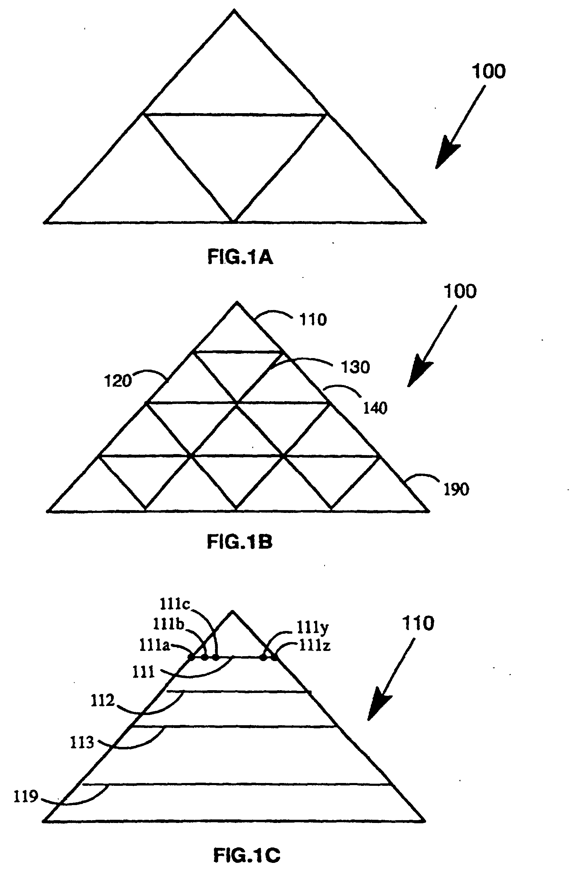

As shown in Figures 1A and 1B, in a first pre-deterministic interpolation method, parent polygon 100 is progressively subdivided in a geometrical manner into a predetermined number of smaller child polygons 110,120,130,140,... 190. Referring to Figure 1C which shows one resulting child polygon 110 in greater detail, accurate texel values are computed for pairs of end points, e.g., end points 111a and 111z, where a scan line 111 intersects the boundaries of child polygon 110. Next, approximate texel values are computed for pixels 111b, 111c, ... 111y located between end points 111a, 111z, by linearly interpolating along scan line 111. This process is repeated for the remaining scan lines 112,113,... 119 of child polygon 110, and also repeated in a similar manner for every scan line of the remaining child polygons 120, 130,... 190, until texel values for every pixel within parent polygon 100 have been computed.

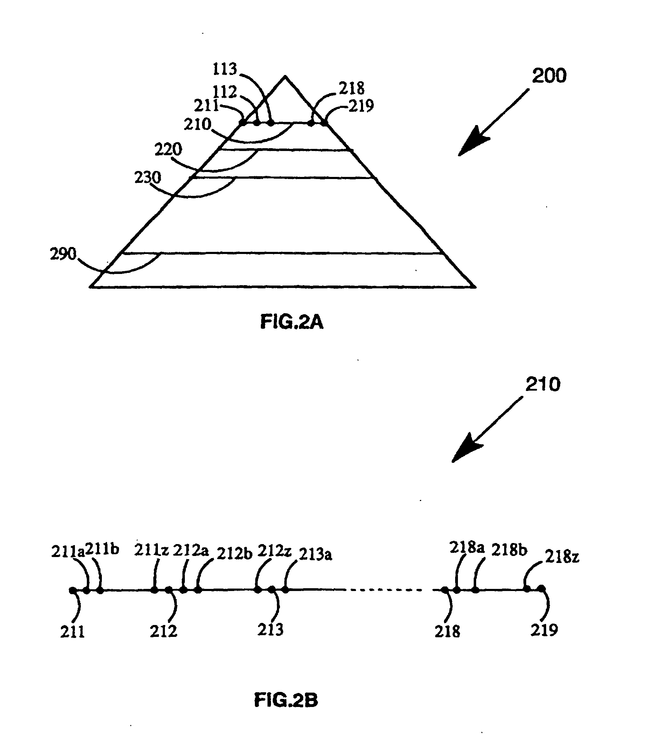

Referring now to Figure 2A, a second pre-deterministic interpolation method involves subdividing each scan line, e.g., scan line 210 of a polygon 200, into scan line segments delineated by a predetermined number of divisional points 212, 213, ... 218, and end points 211, 219 is shown. For each scan line, e.g., scan line 210, accurate texel values are computed for end points 211, 219 and divisional points 212, 213,... 218. Next, as shown in Figure 2B, texel values for the remaining pixels, 211a, 211b, ... 211z, 212a, 212b... 212z,.... 218a, 218b, ...218z along scan line 210 are then computed by linear interpolation. This process is repeated for the remaining scan lines 220, 230, ... 290, until texel values have been computed for every pixel in polygon 200.

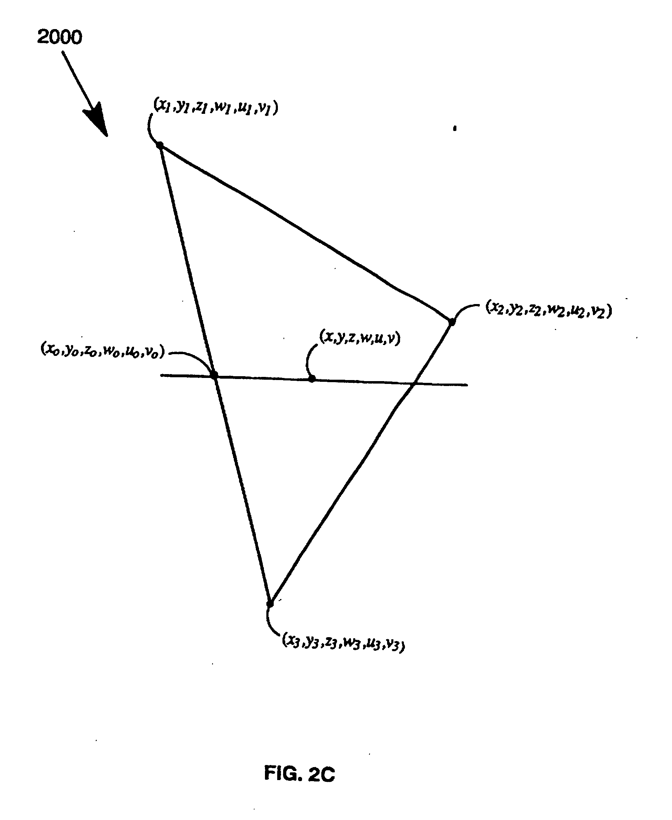

In the above described conventional methods, linear interpolation of intermediate texel values can be accomplished with the following exemplary equations as applied to a polygon 2000 of Figure 2C. Polygon 2000 is a triangle specified by a triple $(x_i, y_i, z_i, w_i, u_i, v_i)$, i = 1,2,3, where $(x_i, y_i)$ are the device coordinate of the triangle vertices, $z_i$ are the Z depth at the vertices, $w_i$ are the absolute value of the reciprocals of the w components of the vertices in the homogeneous clip coordinate system, and $(u_i, v_i)$ are the two-dimensional texture coordinate of the vertices. U, V, and W are the respective linearly interpolated values of u, v, w, along the left edge of triangle 2000 between $(x_1, y_1, z_1, w_1, u_1, v_1)$ and $(x_3, y_3, z_3, w_3, u_3, v_3)$.

$$u = u_0 + (x - x_0)\left(\frac{du}{dx}\right) \qquad\qquad \text{(EQ i)}$$

$$v = v_o + (x - x_o)\left(\frac{dv}{dx}\right) \qquad \text{(EQ ii)}$$

$$w = w_o + (x - x_o)\left(\frac{dw}{dx}\right) \qquad \text{(EQ iii)}$$

and

$$u_o = U(x_o, y_o) \qquad \text{(EQ iv)}$$

$$w_o = W(x_o, y_o) \qquad \text{(EQ v)}$$

$$v_o = V(x_o, y_o) \qquad \text{(EQ vi)}$$

$$\text{texture} = \text{texmap}\ \left(\frac{u}{q}, \frac{v}{q}\right) \qquad \text{(EQ vii)}$$

While the above described conventional methods do reduce the computational load on the processor by replacing some computationally intensive divisions with simpler linear interpolations, both conventional methods are disadvantageously inflexible, inefficient and/or produce unsatisfactory texel values. This is because pre-determining the amount of divisions works well only if texture variations between objects and texture gradients within objects over the entire image arc both fairly constant. In practice, different objects in different images can have different texture properties and so no one predetermined level of scan line division will be optimal for all objects. For example, if the predetermined scan line segments are too short, i.e., the divisional points too closely spaced, an excessive amount of divisional computations will be required of the processor. Conversely, if the predetermined scan line segments are too large, grossly inaccurate approximations of texel values will result at distant pixel locations relative to the divisional points, and the overall texture quality of the image will be poor.

One known graphical display system disclosed in US-A-5307450 uses the method of Z - subdivision of polygons into quadrilaterals and triangles whose vertices are arranged between two adjacent Z planes. This slicing allows texture parameters to be interpolated linearly within each quadrilateral or triangle slice. Object data from a host computer is processed by four pipelined graphics subsystems before being displayed on a display screen. Each object is decomposed into a set of primitives. Each primitive may intersect one or more Z planes thereby producing a set of component portions of the primitive. Once a primitive is sliced into component portions, a texture is mapped onto each component portion by interpolating texture parameters to points on or within the component portion. Finally, the textured component portions are rendered on a display device.

In accordance with a first aspect of the present invention, there is provided a method for operating a computer graphics system which generates and displays images of objects on a display device, the images including pixels having pixel values, the graphics system including elements for modifying the images displayed on the display device, efficiently compute texel values so as to display texture on a given object from a given perspective, said method comprising the steps of:

   adaptively selecting a plurality of divisional points between a pair of end points along a scan line, said adaptive selection step comprising the steps of:

      selecting a texel accuracy criteria; and
      computing the locations of said divisional points located along said scan line as a function of said selected texel accuracy criteria; and
      approximating a plurality of intermediate texel values for corresponding plurality of pixels located between adjacent divisional points of the scan line.

In accordance with a second aspect of the present invention, there is provided a computer program product including computer-usable medium having computer-readable code embedded therein for causing texture of an image to be displayed, the computer program product comprising:

computer readable code configured to adaptively select a plurality of divisional points along a scan line by selecting a texel accuracy criteria and computing the locations of said divisional points located along said scan line as a function of said selected texel accuracy criteria; and computer-readable code configured to approximate a first plurality of intermediate texel values for a first plurality of pixels located between adjacent divisional points of said scan line.

In accordance with a third aspect of the present invention, there is provided an adaptive texel value generator used in a computer graphics system for generating, modifying and displaying an image of objects on a display device, the image including pixels having pixel values, said texel value generator comprising:

a calculator for adaptively computing the locations of a plurality of divisional points along the scan line as a function of a selected texel accuracy criteria; and
an approximator coupled to said calculator, for computing a plurality of intermediate texel values for a corresponding plurality of pixels located between adjacent divisional points of said scan line.

The present invention can thus provide a computer graphics system with a texel value generator capably of generating texel values using a minimal amount of computationally intensive divisions, i.e., a minimal number of divisional points, while maintaining a selectable texel accuracy criteria along a scan line. This can be accomplished by adaptively selecting the divisional point(s) which delineate the scan line segment(s) along each scan line such that the divisional points are as widely spaced as possible without exceeding the selected texel accuracy criteria.

Having selected the texel accuracy criteria, such as a texel error bound, the locations of the divisional points along the scan lines are computed as a function of the selected accuracy criteria. In general since texture gradients are not evenly distributed over the surface of a given object and texture variations are present between different objects of the image, it is advantageous to adaptively select division points one at a time, skipping as many pixels in between divisional points as the local texture gradient will allow. In other words, the optional number of pixels between any two adjacent divisional points varies in accordance with the local texture gradient.

Once the divisional points between the end points of a scan line have been selected, accurate texel values can be computed at these divisional points and also at the end points of the scan line. Typically, two divisions or equivalent mathamatical operations such a reciprocal and a multiply computation, are used to accurately compute each texel value. Next, approximate texel values are computed for the pixels located between adjacent pair of divisional points along the scan line. Suitable approximation schemes include interpolation methods such as linear interpolation.

The above described process of selecting divisional points, computing accurate texel values at these divisional points and end points, and then approximating texel values for pixels lying in between adjacent divisional points and/ or end points, is repeated for each scan line overlapping the given object until all the pixel values for displaying the object have been computed.

The present invention will now be further described, by way of example, with reference to the accompanying drawings, in which:-

**Figure 1A and 1B** illustrate is a flow chart conventional method of dividing parent polygon into a pre-determined plurality of child polygons
**Figure 1C** shows one of the child polygons of Figure 1B in greater detail.
**Figure 2A and 2B** illustrate a conventional method of dividing scan lines of a polygon into groups of contiguous pixels separated by a pre-determined number of divisional points.
**Figure 2C** shows an exemplary triangle for illustrating linear interpolation of intermediate texel values.
**Figure 3** is a block diagram illustrating a texture mapping system which includes a texel value generator of the present invention.
**Figures 4A and 4B** are flow charts illustrating a method for adaptively sub-dividing a scan line in accordance with the invention.
**Figure 5** illustrates a polygon having an optimally sub-divided scan line.
**Figure 6** is a flow chart illustrating a method for approximating texel values while satisfying a selectable texel accuracy criteria.

## DEFINITIONS

Pixel: an integral point located on a pre-defined coordinate system, e.g., X-Y coordinate, that has a pixel value associated with an image of a given object to be displayed.

MIP (multum in parvo) map : a pyramidal parametric data structure which allows both intra-level and inter-level trilinear interpolation schemes, e.g., in an [*u, v, d*] coordinate system, where u, v are spatial coordinates used to access points within a pyramid level, and the d coordinate is used to index and interpolate between the different levels of the pyramid.

Texel value : a texture value for mapping a corresponding pixel value so as to display texture on a given object from a given perspective.

Graphics image : a representation of a given object for display on a graphics display device.

Polygon : a mathematically convenient shaped area of interest on a given object.

## DESCRIPTION OF THE PREFERRED EMBODIMENT

In the following description, numerous details provide a thorough understanding of the present invention. These details include functional blocks and exemplary texel accuracy criteria to assist a developer in implementing an efficient adaptive texel value generator in software, hardware or a combination thereof. In addition, while the texel value generator of the present invention is described with reference to a specific implementation, the invention is applicable to a wide variety of computer graphics systems and environments. In other instances, well-known circuits, structures and program code are not described in detail so as not to obscure the invention unnecessarily.

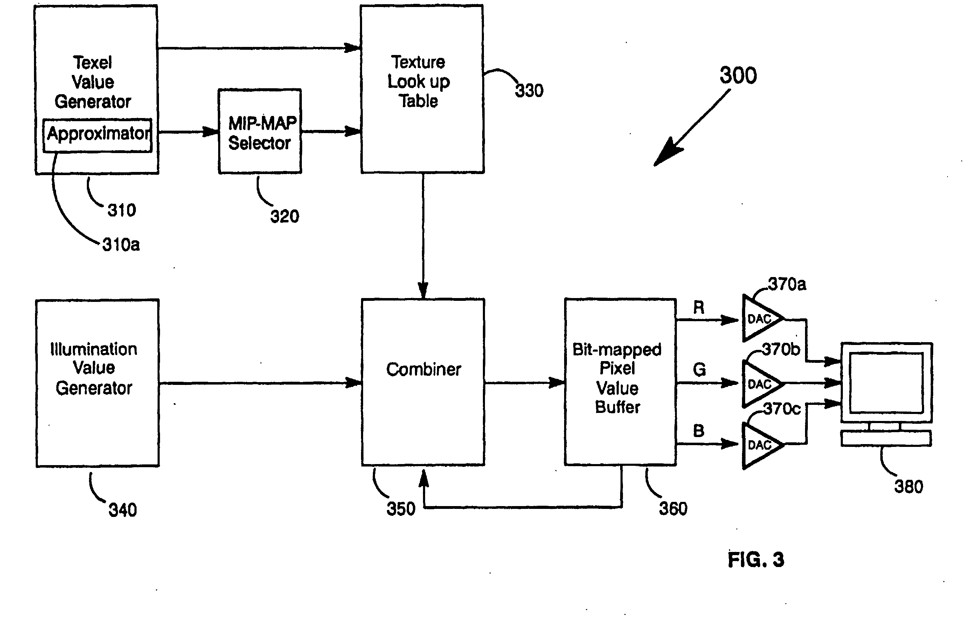

Figure 3 is a block diagram illustrating one embodiment of a texture mapping system 300 which includes a texel value generator 310 of the present invention. Texture mapping system 300 also includes a MIP-map selector 320, a texture lookup table 330, an illumination value generator 340, a combiner 350, a bit-mapped pixel value buffer 360, three digital-to-analog converters (DACs) 370a, 370b, 370c, and a display device 380.

Texel value generator 310 is coupled to texture lookup table 330, both directly and through MIP-map selector 320. The respective output nodes of texture lookup table 330 and illumination value generator 340 are coupled to combiner 350. The output node of combiner 350 is coupled to bit-mapped pixel value buffer 360. In turn, pixel value buffer 360 is coupled to the digital input nodes of DACs 370a, 370b, 370c. The analog output nodes of DACs 370a, 370b, 370c are coupled to display device 380.

Texel value generator 310 provides u, v signals and derivative u, v signals to texture lookup table 330 and MIP selector 320, respectively. In turn, MIP selector 320 provides MIP-map select signals to texture lookup table 330. Texture lookup table 330 and illumination value generator 340 produce texture and illumination values, respectively, for combiner 350. Combiner 350 then combines these texture and illumination values, together with feedback pixel values from pixel value buffer 360, and generates composite bit-mapped pixel values for buffer 360. Finally, pixel value buffer 360 provides the respective digital RGB signals, which are converted by DACs 370a, 370b, 370c, into the corresponding analog RBG signals to display device 380.

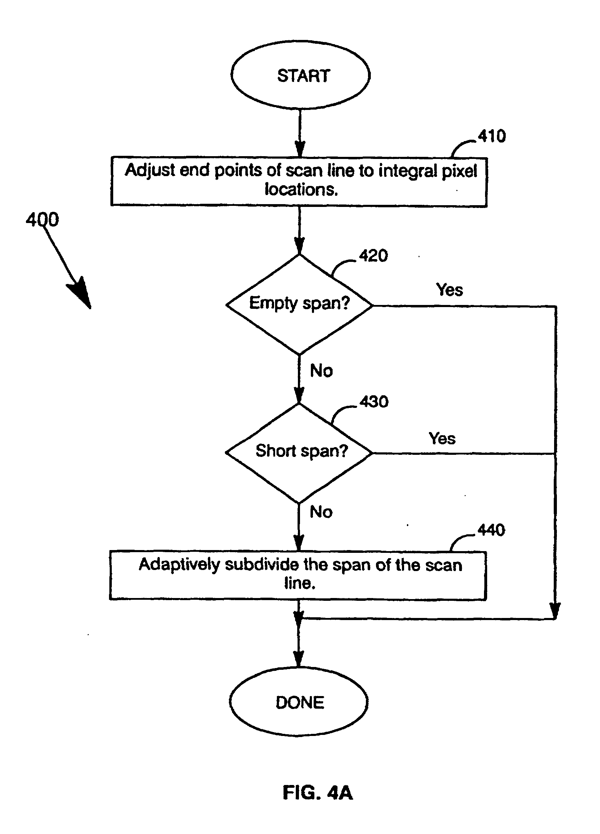

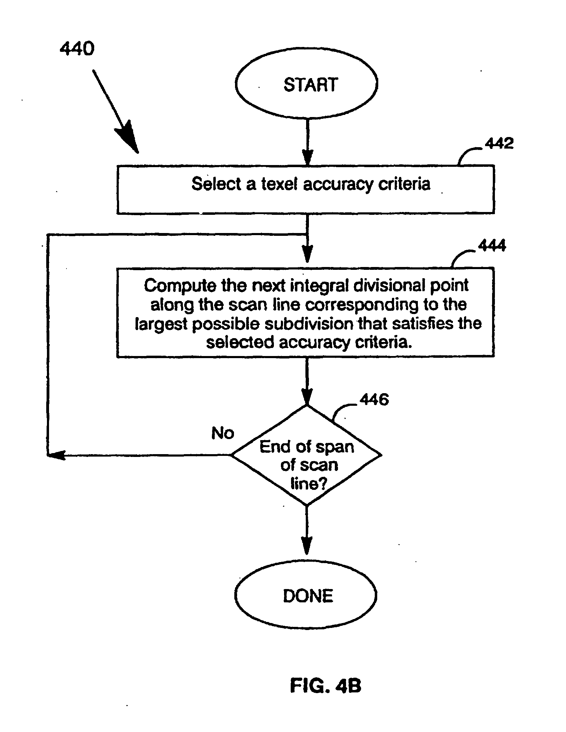

Figure 4A and 4B are flow charts illustrating an optimal method for adaptively subdividing a scan line, the method useful in association with texel value generator 310. In one embodiment, in order to be compatible with most conventional graphics display devices, the texel values are generated along parallel scan lines which are bounded by polygons, each of which define an area of interest on a given object. Each scan line has pairs of end points where the scan line intersects the boundary of a polygon. These scan lines are decomposable into rows of pixels at integral locations in an X-Y coordinate system.

Referring to the flowchart of Figure 4A, first the end points of a scan line are adjusted to integral pixel coordinate locations by a suitable method, such as trucation or rounding up/down (step 410). If the scan line is extremely short, i.e., the span of the scan line is empty because the two integral end points have merged, then no sub-division is required (step 420). Similarly, if the span of the scan line is too short to substantially benefit from any sub-division, no sub-division is performed (step 430).

Conversely, if the span is long enough to substantially benefit from sub-division, texel value generator 310 adaptively sub-divides the span of the scan line into a minimum number of optimally spaced sub-divisions (step 440).

Referring now to the flowchart of Figure 4B, step 440 is shown in greater detail. First a suitable texel accuracy criteria is selected (step 442). In this embodiment, the texel accuracy criteria is a texel error bound. Starting at one end of the scanline, texel value generator 310 computes the location of the next integral divisional point along the scan line corresponding to the largest possible sub-divisional spacing that satisfies the selected accuracy criteria (step 444). The computation of additional divisional point(s) is repeated along the scan line until the opposite end of scan line is reached (step 446). Appendices A and B show equations and a computer program, respectively, for computing the location of divisional point(s) in the preferred embodiment.

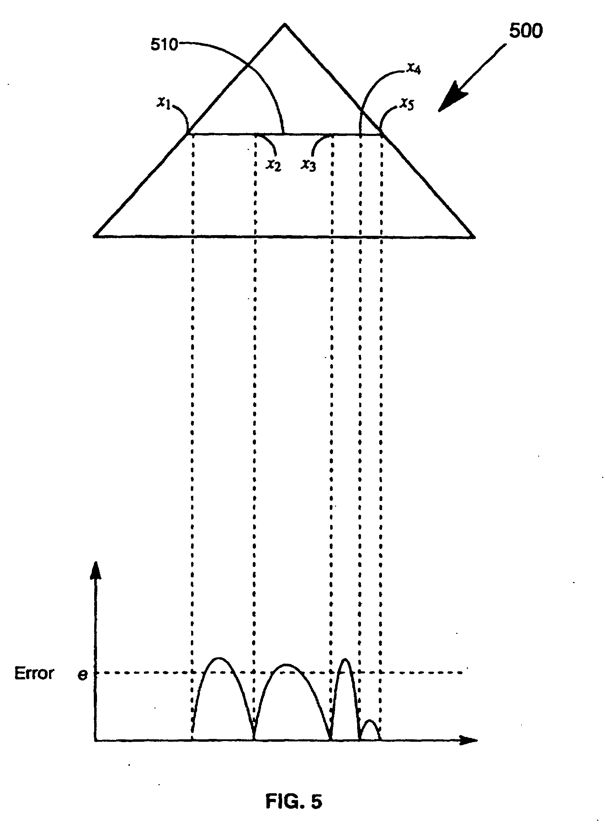

Figure 5 illustrates a polygon 500 having a scan line 510 subdivided by division points $x_2$, $x_3$, $x_4$ and end points $x_1$, $x_5$. In accordance with the preferred embodiment, the error of the approximated texture values increases, reaches a maximum at or approximately at an error bound value *e* and then decreases between adjacent division/end points. Note that optimizing with respect to an error bound *e*, may result in uneven spacing as illustrated by end/division

point pairs $x_1$ and $x_2$, $x_2$ and $x_3$, $x_3$ and $x_4$, and $x_4$ and $x_5$.

In the preferred embodiment, the spacing $t$ between adjacent divisional points are computed using the following equation:

$$t = e + 2 \sqrt{e \frac{wl}{|dw|}} \qquad \text{(EQ viii)}$$

where

e =    the error bound
w =    absolute value of the reciprocals of the $w$ components

and

$$dw = \frac{wr - wl}{xr - xl}$$

where

wl =    $w$ value at the left divisional point

and

wr =    $w$ value at the adjacent right divisional point

Note that along the span of a scan line, at a given step $t$, $dw$ and $e$ are constants, and $wl$ changes. One suitable value for $e$ is 0.5, i.e., half a pixel. By selecting $e = 0.5$, each pixel will map to within half a pixel of where it should go. Although magnified texel edges will show an occasional glitch of non-monotonicity, this can easily be corrected by decreasing the selected $e$ value. Conversely, increasing the selected $e$ value increases the probability of glitches since the error bound is increased.

Alternatively, equation viii can be of the form:

$$t = e + 2 \sqrt{\frac{e}{|dw|}} \cdot \sqrt{wl} \qquad \text{(EQ ix)}$$

By normalizing $w$ over the polygon, "$wl$" can be kept in the range [0, 1]. A look up table for a square root function can be used in place of a square root computation. Further efficiency is also possible because

$$\sqrt{\frac{e}{|dw|}}$$

is constant over each polygon.

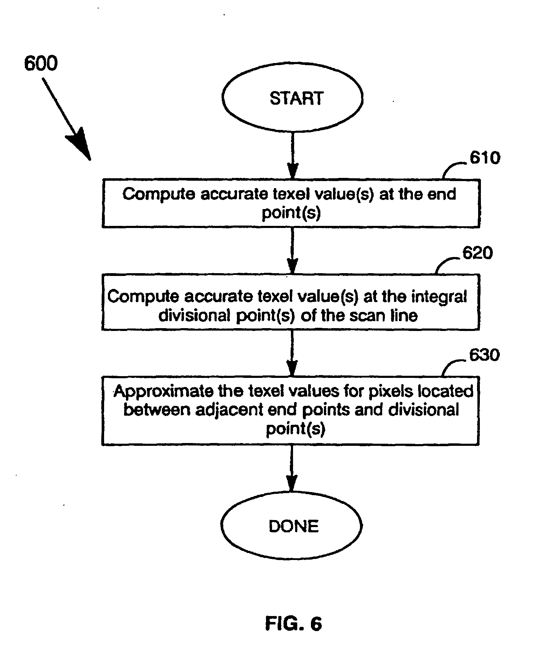

Figure 6 is a flow chart illustrating a method for approximating the texel values along the span of the scan line after the divisional point(s), if any, have been selected. First, texel value generator 310 computes accurate texel values at the two integral end points (step 610). Accurate texel values are also computed for the integral divisional point(s), if any, selected in step 444 (step 620). Finally, texel value generator 310 which includes an approximator 310a generates approximate texel values for the intermediate pixels located between adjacent end points and divisional point(s) of each scan line (step 630). Suitable approximation methods include interpolating techniques such as the linear interpolation using the equations EQ (i) - (ix) described above.

In some embodiments, mip map levels are also computed by approximation. Since each of the subdivided line segments defined by adjacent divisional points is affine, the MIP map level is constant across each line segment. Typically, MIP maps are decimated by a factor of 2 in $u$ and $v$. Hence, MIP map levels can be approximated using the following equation:

$$level = \frac{1}{2}\log_2\left(\left(\frac{du}{dx}\right)^2 + \left(\frac{dv}{dx}\right)^2\right) \qquad \text{(EQ x)}$$

## APPENDIX A

### Introduction

Let a triangle be specified by the triple $(x_i, y_i, z_i, w_i, u_i, v_i)$, $i=0,1,2$, where $(x_i, y_i)$ are the device coordinates of the triangle vertices, $z_i$ are the Z depth at the vertices, $w_i$ are the

$(x_0, y_0, z_0, w_0, u_0, v_0)$

$(x_1, y_1, z_1, w_1, u_1, v_1)$

$(x_2, y_2, z_2, w_2, u_2, v_2)$

absolute value of the reciprocals of the w components of the vertices in the homogeneous clip coordinate system, and $(u_i, v_i)$ are the two-dimensional texture coordinates of the vertices.

For 2D textures of width W and height H, we define the mapping from any texture coordinate $(u, v)$ to a point $(p, q)$ in the half-open texel space $[0,W) \times [0,H)$ to be

$$p = (u - \lfloor u \rfloor) \times W$$
$$q = (v - \lfloor v \rfloor) \times H \qquad \text{(EQ 1)}$$

This is slightly different from the XGL and OpenGL formulation that maps u=1 or v=1 to W-1 or H-1, respectively. (EQ 1) is preferable since it has a simple mapping to fixed point arithmetic. For example, to perform the linear interpolation

$$u = u0 + n \times du \qquad \text{(EQ 2)}$$

and map u to texel p, we would compute

$$U0 = u0 - \lfloor u0 \rfloor$$
$$DU = du - \lfloor du \rfloor \qquad \text{(EQ 3)}$$

$$U = U0 + n \times DU \qquad \text{(EQ 4)}$$

$$p = U \times W \qquad \text{(EQ 5)}$$

where U0 and DU are considered to be unsigned binary fractions 0.32, (EQ 4) is computed in 32 bit arithmetic ignoring overflow, and (EQ 5) is computed to as many fractional bits as desired (e.g., (U*W)>>32 gives nearest neighbor mapping.)

To convert from XGL or OpenGL texture coordinates to ours, it suffices to apply a scale factor of slightly less than one in u and v.

An affine texturing results when the $w_i$ values are ignored and the $(u_i, v_i)$ are linearly interpolated over the triangle. *A perspective* texturing results when (ui * wi, vi * wi, wi) are linearly interpolated over the triangle, and the texture coordinates (u, v) obtained by computing (ui wi / wi, vi wi / wi) per pixel. In other words, you multiply ui and wi, and interpolate that product. For each pixel, you divide the interpolated produce by the interpolated wi.

Clearly, the two an equivalent if wi is constant over the triangle. Also clearly, the difference between the affine and perspective mapping increases as the ratio min(wi) / max (wi) decreases.

Due to the linearity of the operation in (EQ 1), for an affinely textured triangle, the (ui, vi) values as well as the du/dy, dv/dy, du/dx, dv/dx values over the triangle can all be mapped to the range [0,1) via the operation $u - \lfloor u \rfloor$ = *Frac*(*u*) applied once at the vertices. Specifically, it is obvious that

$$Frac(u0 + n \times du) = Frac(Frac(u0) + n \times Frac(du)) \qquad \text{(EQ 6)}$$

This is why (EQ 3) and (EQ 4) work.

## Adaptive Subdivision

Perspective texturing interpolates uw, vw, and w, instead of u and v. Thus, along the left edge of the triangle below, we interpolate, e.g.. uwl linearly between u0 x w0 and u1 x w1. Across the scan line, we linearly approximate, e.g., uw between uwl and uwr.

There would be at most a minor gain in performance in doing an adaptive approximation along the triangle edges; we would save only the computation of wl and wr at the cost of the extra work in doing the approximation. However, across the scan line, the work to be saved is the two divides per pixel (or one reciprocal and two multiplies).

The approximation we wish to pursue is a piecewise-linear approximation to the perspective texturing (uw/w, vw/w) across the scan line at y (see the figure.) We wish to subdivide the scan line into segments such that:

- Each segment has the same maximum error
- There are as few segments as possible

As our error criteria, we choose pixel error. That is, we want a particular texel at (u, v) to map linearly to (x', y') where (x'y') is close enough to the correct perspective location (x,y). It is incorrect to choose texel error if one wants to use a constant error bound.

Since we are operating on a scan line only, we need consider only x as varying. We will derive the below using x and u only; we will discover a surprising result that obviates the need to derive the x and v relationship.

We have the following equations:

$$T(x) = \frac{x-xl}{xr-xl} \qquad \text{(EQ 7)}$$

which maps the pixel location x in the range [xl, xr] to a value in the range [0,1];

$$UL(t) = ul + t(ur-ul) \qquad \text{(EQ 8)}$$

which is the linear interpolation of u between ul and ur;

$$UP(t) = \frac{ulwl+t(urwr-ulwl)}{wl+t(wr-wl)} \qquad \text{(EQ 9)}$$

which is the perspective interpolation of u between ul wl/wl and ur wr/wr; and finally

$$M(u) = Wu \qquad \text{(EQ 10)}$$

which maps u in the range [0,1) to the corresponding texture map pixel horizontal coordinate. W is the width of the texure map. If a nearest neighbor mapping is desired, then one takes the floor of M.

The pixel error then becomes, given the horizontal coordinate m,

$$err(m) = T^{1-}(UL^{-1}(M^{-1}(m)))-T^{-1}(UP^{-1}(M^{-1}(m))) \qquad \text{(EQ 11)}$$

the left term is the inverse of the affine approximation, the right term is the perspective inverse.

Now, let's find the value of m for which the error is maximal.

We have

$$T^{-1}(t) = xl+t(xr-xl)$$

$$UL^{-1}(u) = \frac{u-ul}{ur-ul}$$

$$UP^{-1}(u) = \frac{(ulwl-uwl)}{(ulwl+uwr-urwr-uwl)} \qquad \text{(EQ 12)}$$

$$M^{-1}(m) = \frac{m}{W}$$

Expanding out err(m) using the above and simplifying, we have

$$err(m) = \frac{(Wul-m)(Wur-m)(wr-wl)(xr-xl)}{W(ur-ul)(mwr+Wulwl-mwl-Wurwr)} \qquad \text{(EQ 13)}$$

Examing the shape of the error curve with Mathematica, we see that it is a convex curve with a well-defined maxima or minima. A sample curve is in the following figure. The next step is differentiationg with respect to m:

$$\frac{d}{dm}err(m) = \frac{(wr-wl)(xr-xl)(m^2(wr-wl)-2mW(urwr-ulwl)+W^2(ur^2wr-ul^2wl))}{W(ur-ul)(mwr+Wulwl-mwl-Wurwr)^2} \qquad \text{(EQ 14)}$$

In the denominator, W is always nonzero. We assume, for the moment, that $ul \neq ur$. That assumption also ensures that the term

$$mwr + Wulwl - mwl - Wurwr = m(wr-wl) + Wulwl - Wurwr \qquad \text{(EQ 15)}$$

is nonzero, as well. To see that, rewrite Wul as ml and Wur as mr. Then, for it to be zero, we must have

$$wlml - wrmr = m(wl-wr) \qquad \text{(EQ 16)}$$

Since m is in the range [ml, mr], we can write m as ml + t(mr-ml); substituting in the above and simplifying, we get

$$wr(ml-mr) = t(wl-wr)(mr-ml) \qquad \text{(EQ 17)}$$

Since $ml \neq xmr$, that reduces to

$$t = \frac{wr}{(wr-wl)} \qquad \text{(EQ 18)}$$

Now we have wl, wr > 0, therefore t > 1, which contradicts m being in the range [ml, mr]. Therefore, (EQ 15) is nonzero. Thus, we can find the maximum by equating the numerator of (EQ 14) to zero, and solving for m. This gives us the two solutions

$$m_{maxerr} = (\frac{W(ul\sqrt{wl}-ur\sqrt{wr})}{\sqrt{wl}-\sqrt{wr}} \quad \frac{W(ul\sqrt{wl}-ur\sqrt{wr})}{\sqrt{wl}+\sqrt{wr}} \qquad \text{(EQ 19)}$$

Since wl can equal wr, the first solution is not the one we seek. Now, we substitute the second value back into err(m) from (EQ 13) to get the remarkable value for the error

$$err(m_{maxerr}) = (xr-xl)\frac{\sqrt{wr}-\sqrt{wl}}{\sqrt{wr}+\sqrt{wl}} \qquad \text{(EQ 20)}$$

An alternative formulation of the above is to let $\alpha = \frac{min(wl,wr)}{max(wl,wr)}$ and rewrite it as

$$err(m_{maxerr}) = (xr - xl)\frac{1-\sqrt{\alpha}}{1+\sqrt{\alpha}} \qquad \text{(EQ 21)}$$

The amazing thing about the above is that it is independent of u and the texture map width W! To paraphrase, the pixel error in using affine texturing instead of perspective texturing depends only on the width of the span and the ratio of the w values at the span ends.

Going back to our original assumption that $ul \neq ur$, we can now see that if they are equal, no subdivision is needed (the whole scan line is the same texel). In that case, for simplicity we choose to subdivide anyway rather than check for that exception.

Now let's calculate the pixel value in the range [xl, xr] for which the maximum error occurs. There are two ways to map $m_{maxerr}$ to x, via

$$T^{-1}(UL^{-1}(M^{-1}(m))) \qquad \text{(EQ 22)}$$

or via

$$T^{-1}(UP^{-1}(M^{-1}(m)))$$

The correct inverse to use is (EQ 23), as we want the correct x, not the approximate x. This gives the point of maximum error as

$$x_{maxerr} = \frac{xl\sqrt{wr} + xr\sqrt{wl}}{\sqrt{wl} + \sqrt{wr}}$$

(EQ 24)

Now, we are ready to solve the problem as posed originally. Let

$$xt = xl + t$$
$$dw = \frac{wr - wl}{xr - xl}$$
$$wt = wl + tdw$$

(EQ 25)

for t=0, 1, ...., xr-xl. Then can rewrite (EQ 20) as

$$err(t) = t\frac{\sqrt{wt} - \sqrt{wl}}{\sqrt{wt} + \sqrt{wl}}$$

(EQ 26)

(EQ 26) gives us the maximum error of an affine approximation if we subdivide at xt. Now let us solve for t given a fixed error e. We have the two solutions

$$t = e \pm 2\sqrt{e\frac{wl}{dw}}$$

(EQ 27)

Since t must increase as e increases, we pick the + branch. If dw < 0, we choose the negative sign for e to maintain a real radical; we get the same effect by choosing Abs[dw] instead. Therefore, the point to subdivide a span given a desired maximum error e >0 is

$$t = e + 2\sqrt{e\frac{wl}{|dw|}}$$

(EQ 28)

Note that as we step along the span, t at a time, dw and e are constant, and only wl changes.
A good value to use for e is 0.5, e.g., half pixel. That means that each texel will map to within half a pixel of where it should go. Magnified texel edges will show an occasional glitch of nonmonotonicity. Increasing the error increases the glitch probability and also increases the maximum magnitude. See the figures for examples. Since we acutally are subdividing across a scan line, we want to subdivide at pixel boundaries. We simply adjust to the next pixel.

**Determining triangle affineness**

How does one determine if a triangle is sufficiently small (or the w values are close enough) that the entire triangle can be textured affinely?
We use (EQ 21). Since we did not, in fact, make any assumptions about the direction of the span, we can conclude that a triangle is affine if the error is *err* $(m_{maxerr}) \leq 0.5$ for all segments within the triangle, with the (xr - xl) term replaced by the length of the segment.
We can calculate the maximum possible length by using the max norm, or the max of the width or height of the triangle bounding box. To calculate the maximum value of the w expression, let $\alpha = \frac{min(w0, w1, w2)}{max(w0, w1, w2)}$ and expand (EQ 21) to

$$err_{triangle} \leq max(width, height)\,\frac{1 - \sqrt{\alpha}}{1 + \sqrt{\alpha}}$$

(EQ 29)

We can lockup the square root expression in a table indexed between (0,1]. The cost of determining triangle affineness is the cost of calculating the bounding box, the minimum ratio, a table lookup and a multiply.

We have not investigated more accurate estimations of affineness. One possible approach is to observe that the maximum error must occur along a segment whose endpoints lie on the triangle boundary.

## Mip map level calculation

Since each of the subdivided segments is affine, the scale is constant across that segment. Thus, the mipmap level is also constant across the segment.

A quick way to estimate the scale is to assume that the texture is uniformly sealed and just compute the euclidean norm across the scan line

$$scale = \sqrt{\left(\frac{du}{dx}\right)^2 + \left(\frac{dv}{dx}\right)^2} \qquad\qquad \text{(EQ 30)}$$

Since the mipmaps typically used are decimated by a factor of 2 in u and v, the corresponding mipmap level to choose is log 2 (*scale*) or

$$level = \frac{1}{2}\log_2\left(\left(\frac{du}{dx}\right)^2 + \left(\frac{dv}{dx}\right)^2\right) \qquad\qquad \text{(EQ 31)}$$

Note that the ilogb function is a quick approximation to $\log_2$, as one will be using an integral level anyway.

**FIGURE 1.**

Difference of perspective texturing and adaptive subdivision affine approximation. The correct texture is in the upper left, and the adaptive texture in the upper right. The lower left is the XOR of the two upper images. The lower left shows the adaptive subdivision. The texture is drawn affinely along each horizontal segment between the staircase curves. The error cutoff is 0.5.

FIGURE 2.

The only difference between this and FIGURE 1. is that the error cutoff is now 4.0. There are fewer subdivisions per scan line. If the texture map were an image of a face (fewer high-frequency spatial components), then the approximation would still be nearly indistinguishable from the exact texturing.

FIGURE 3.    Magnified Image of exact perspective texturing

FIGURE 4.    Magnified image of approximate texturing. The effect of the 0.5 pixel error threshold is clearly visible along the edges of the mapped texture.

FIGURE 5.

Here, a moire pattern is used to magnify the effect of an error threshold of 0.5. The correct texturing is on the left. The two patterns become identical at an error threshold of 0.010.

16

APPENDIX B

```
/* Exemplary routine to subdivide a span to approximate a perspective transform */

/* pixel error threshold. An experimentally-determined good value */
#define ERR 0.5

#define MAXKNOTS (100)

struct subdiv {
/*
        uwl, vwl, wl: u*w, v*w, w at left of span. Note that it is u*w, v*w,
                and w that are linearly interpolated down the edges.
        duw, dvw, dw: d(uw)/dx, d(vw)/dx, dw/dx, which are constant over
                the triangle.
        xl, xr: the span in fract pixels. we subdivide this span at
                integral pixel coords.
*/
        float   uwl;
        float   vwl;
        float   wl;
        float   duw;
        float   dvw;
        float   dw;
        float   xl;
        float   xr;
        int n;                          /* # of values here */
                                        /* if n == 0, empty span.
                                         for n >= 2, last span extends from
                                         x to x, inclusive. Initial spans
                                         extend from x to x-1 */
        struct {
                int x; /* x of start of subspan */
                float u;/* u at start of subspan */
                float v;/* v at start of subspan */
        } knots[MAXKNOTS];
};

#define APPEND(uu,vv,xx) do { \
        assert(s->n>=0 && s->n<MAXKNOTS); \
        s->knots[s->n].u = uu; \
        s->knots[s->n].v = vv; \
        s->knots[s->n].x = xx; \
        s->n++; } while(0)

static void
subdiv(struct subdiv *s)
{
        int     ixl, ixr, cnt, it;
        float   ldel, duw, dvw, dw, uwl, vwl, wl, winv, b, t;

        /* initialize to no subdivisions */
        s->n = 0;

        /* adjust endpoints to integral pixels */

        /* ceil() and ceil()-1 rule for left and right polygon edges */
        ixl = ceil (s->xl);
        cnt = ceil(s->xr) - ixl;

        /* empty span? */
        if (cnt <= 0)
                return;

        ldel = s->xl - ixl;
```

```
duw = s->duw;
dvw = s->dvw;
dw = s->dw;
uwl = s->uwl + duw*ldel;
vwl = s->vwl + dvw*ldel;
wl = s->wl + dw *ldel;

/* short span? */
if (cnt == 1) {
        winv = 1.0/wl;
        APPEND(uwl*winv, vwl*winv, ixl);
        APPEND(0.0, 0.0, ixl);
        return;
}

ixr = ixl+cnt-1;

/* optimally subdivide the span */

/* initialize subdivision calculation */
if (dw < 0.0) dw = -dw;
b = 2.0*sqrt(ERR)/sqrt(dw);

for (;;) {
        winv = 1.0/wl;

        /* output left part of subdivision */
        APPEND(uwl*winv, vwl*winv, ixl);

        /* solve for the t value that would give an error = ERR */
        t = b*sqrt(wl) + ERR;

        /* pick next largest integral t */
        it = ceil(t);
        assert (it > 0);

        t = it;

        if (it >= (ixr - ixl))
                /* no further subdivision occurs */
                break;
        else {
                /* subdivide at t */
                uwl += t*duw;
                vwl += t*dvw;
                wl += t*dw;
                ixl += it;

                assert(wl > 0.0);
        }
}

/* output right end of last span */
t = ixr - ixl;
winv = 1.0/(wl + dw*t);
APPEND((uwl + duw*t)*winv, (vwl + dvw*t)*winv, ixr);
```

**Claims**

1. A method for operating a computer graphics system (300) which generates and displays images of objects on a display device (380), the images including pixels having pixel values, the graphics system including elements for modifying the images displayed on the display device, to efficiently compute texel values so as to display texture on a given object from a given perspective, said method being **characterized by** the steps of:

adaptively selecting a plurality of divisional points between a pair of end points along the scan line (630), said adaptive selection step comprising the steps of:

selecting a texel accuracy criteria (442); and
computing the locations of said divisional points (444) located along said scan line as a function of said selected texel accuracy criteria; and
approximating a plurality of intermediate texel values for a corresponding plurality of pixels located between adjacent divisional points of the scan line (630).

2. A method according to claim 1 wherein said approximating step includes an interpolating step.

3. A method according to claim 2 wherein said interpolating step is a linear interpolating step.

4. A method according to claim 1 wherein said texel accuracy criteria is a texel error bound.

5. A method according to claim 4 wherein said texel error bound is a constant $e$, and a step $t$ between adjacent divisional points is computed using an equation:

$$t = e + 2\sqrt{e\frac{wl}{|dw|}}$$

where

e = the error bound
w = absolute value of the reciprocals of the w components
and $dw = \frac{wr - wl}{xr - xl}$
where $wl$ = w value at the left divisional point
and $wr$ = w value at the adjacent right divisional point

6. A method according to claim 1 further comprising the steps of:

approximating a second plurality of intermediate texel values for a second corresponding plurality of pixels located between one of said end points and an adjacent divisional point of said scan line.

7. A method according to claim 6 wherein said approximating step includes an interpolating step.

8. A method according to claim 7 wherein said interpolating step is a linear interpolating step.

9. A method according to claim 1 further comprising the step of:

accurately computing a corresponding plurality of texel values at said divisional points and said end points of said scan line.

10. A method according to claim 1 further comprising the step of using said intermediate texel values to modify said pixel values of said pixels.

11. A method according to claim 10 wherein said modification of said pixel values includes a step of computing MIP map level values for said intermediate texel values using a equation:

$$level = \frac{1}{2}\log_2\left(\left(\frac{du}{dx}\right)^2 + \left(\frac{dv}{dx}\right)^2\right)$$

where $u$ and $v$ are spatial co-ordinates.

12. An adaptive texel value generator (310) used in a computer graphics system (300) for generating, modifying and displaying an image of objects on a display device (380), the image including pixels having pixel values, said texel value generator being **characterized by**:

a calculator for adaptively computing the locations of a plurality of divisional points along a scan line as a function of a selected texel accuracy criteria; and
an approximator (310a) coupled to said calculator, for computing a plurality of intermediate texel values for a corresponding plurality of pixels located between adjacent divisional points of said scan line.

13. A generator according to claim 12 further comprising a memory element coupled to said calculator, for storing said selected texel accuracy criteria.

14. A generator according to claim 13 wherein said stored texel accuracy criteria is a texel error bound.

15. A generator according to claim 14 wherein said texel error bound is a constant $e$, and a step $t$ between adjacent divisional points is computed using an equation:

$$t = e + 2\sqrt{e\frac{wl}{|dw|}}$$

where e = the error bound
$w$ = absolute value of the reciprocals of the $w$ components
and $dw = \frac{wr - wl}{xr - xl}$
where $wl \stackrel{\triangle}{=} \bar{w}^{xl}$ value at the left divisional point
and $wr = w$ value at the adjacent right divisional point

16. A generator according to claim 12 wherein said approximator (310a) includes an interpolator for interpolating between texel values of said adjacent divisional points.

17. A generator according to claim 14 wherein said interpolator is a linear interpolator.

18. A generator according to claim 12 wherein said calculator includes a divider for accurately computing texel values for said divisional points.

19. A generator according to claim 12 wherein said pixel values are modified by computing MIP map levels of said intermediate texel values using a equation:

$$level = \frac{1}{2}\log_2\left(\left(\frac{du}{dx}\right)^2 + \left(\frac{dv}{dx}\right)^2\right)$$

where $u$ and $v$ are spatial co-ordinates.

20. A computer program product including a computer-usable medium having computer-readable code embedded therein for causing texture of an image to be displayed, the computer program product being **characterized by**:

computer-readable code configured to adaptively select a plurality of divisional points along a scan line by selecting a texel accuracy criteria and computing the locations of said divisional points located along said scan line as a function of said selected texel accuracy criteria; and
computer-readable code configured to approximate a first plurality of intermediate texel values for a first plurality of pixels located between adjacent divisional points of said scan line.

21. A computer program product according to claim 20 wherein said approximation is an interpolation.

22. A computer program product according to claim 21 wherein said interpolation is linear.

**23.** A computer program product according to claim 20 wherein said texel accuracy criteria is a texel error bound.

**24.** A computer program product according to claim 22 wherein said texel error bound is a constant $e$, and a step $t$ between adjacent divisional points is computed using an equation:

$$t = e + 2\sqrt{e\frac{wl}{|dw|}}$$

where e = the error bound
$w$ = absolute value of the reciprocals of the $w$ components
and $dw = \frac{wr - wl}{xr - xl}$
where $wl = w$ value at the left divisional point
and $wr = w$ value at the adjacent right divisional point

**25.** A computer program product according to claim 20 further comprising computer-readable code configured to approximate a second plurality of intermediate texel values for a second plurality of pixels located between an end point and an adjacent divisional point of said scan line.

**26.** A computer program product according to claim 20 further comprising computer-readable code configured to accurately compute a plurality of texel values at said divisional points and said end points of said scan line.

**27.** A computer program product according to claim 20 further comprising computer-readable code configured to use said intermediate texel values to modify said pixel values of said pixels.

**28.** A computer program product according to claim 27, wherein said modification of said pixel values includes a computation of MIP map level values for said intermediate texel values using an equation:

$$level = \frac{1}{2}\log_2\left(\left(\frac{du}{dx}\right)^2 + \left(\frac{dv}{dx}\right)^2\right)$$

where $u$ and $v$ are spatial co-ordinates.

**Patentansprüche**

**1.** Verfahren zum Betrieb eines Computergrafiksystems (300), das Bilder von Objekten auf einem Bildschirm (380) erzeugt und anzeigt, wobei die Bilder Pixel mit Pixelwerten umfassen, das Grafiksystem Elemente zum Modifizieren der Bilder, die auf dem Bildschirm angezeigt werden, umfasst, um Texel-Werte effektiv zu berechnen und so eine Struktur auf einem gegebenen Objekt aus einer gegebenen Perspektive anzuzeigen, wobei das Verfahren durch folgende Schritte **gekennzeichnet** ist:

adaptives Auswählen einer Vielzahl von Unterteilungspunkten zwischen einem Paar Endpunkten entlang der Abtastlinie (630), wobei der Schritt des adaptiven Auswählens folgende Schritte umfasst:

Auswählen eines Texel-Genauigkeitskriteriums (442); und

Berechnen der Stellen der Unterteilungspunkte (444), die entlang der Abtastlinie angeordnet sind, als eine Funktion des ausgewählten Texel-Genauigkeitskriteriums; und

Annähern einer Vielzahl von Texel-Zwischenwerten für eine entsprechende Vielzahl von Pixeln, die zwischen benachbarten Unterteilungspunkten der Abtastlinie (630) angeordnet sind.

**2.** Verfahren nach Anspruch 1, wobei der Annäherungsschritt einen Interpolationsschritt umfasst.

**3.** Verfahren nach Anspruch 2, wobei der Interpolationsschritt ein linearer Interpolationsschritt ist.

**4.** Verfahren nach Anspruch 1, wobei das Texel-Genauigkeitskriterium eine Texel-Fehlerschranke ist.

**5.** Verfahren nach Anspruch 4, wobei die Texel-Fehlerschranke eine Konstante *e* ist und ein Schritt *t* zwischen benachbarten Unterteilungspunkten unter Verwendung einer Gleichung berechnet wird:

$$t = e + 2\sqrt{e\frac{wl}{|dw|}}$$

wobei e = Fehlerschranke
*w* = absoluter Wert der Kehrwerte der *w*-Komponenten
und $dw = \frac{wr - wl}{xr - xl}$
wobei wl = $\tilde{w}$ Wert am linken Unterteilungspunkt
und *wr* = w Wert am benachbarten rechten Unterteilungspunkt.

**6.** Verfahren nach Anspruch 1, das des Weiteren die Schritte umfasst:

Annähern einer zweiten Vielzahl von Texel-Zwischenwerten für eine zweite entsprechende Vielzahl von Pixeln, die zwischen einem der Endpunkte und einem benachbarten Unterteilungspunkt der Abtastlinie angeordnet sind.

**7.** Verfahren nach Anspruch 6, wobei der Annäherungsschritt einen Interpolationsschritt umfasst.

**8.** Verfahren nach Anspruch 7, wobei der Interpolationsschritt ein linearer Interpolationsschritt ist.

**9.** Verfahren nach Anspruch 1, das des Weiteren den Schritt umfasst:

exaktes Berechnen einer entsprechenden Vielzahl von Texel-Werten an den Unterteilungspunkten und den Endpunkten der Abtastlinie.

**10.** Verfahren nach Anspruch 1, das des Weiteren den Schritt der Verwendung der Texel-Zwischenwerte zum Modifizieren der Pixelwerte der Pixel umfasst.

**11.** Verfahren nach Anspruch 10, wobei die Modifizierung der Pixelwerte einen Schritt der Berechnung von MIP-Abbildungsniveauwerten für die Texel-Zwischenwerte unter Verwendung einer Gleichung umfasst:

$$Niveau = \frac{1}{2}\log_2\left(\left(\frac{du}{dx}\right)^2 + \left(\frac{dv}{dx}\right)^2\right)$$

wobei *u* und *v* räumliche Koordinaten sind.

**12.** Adaptiver Texel-Wertgenerator (310), der in einem Computergrafiksystem (300) zur Erzeugung, Modifizierung und Anzeige eines Bildes von Objekten auf einem Bildschirm (380) verwendet wird, wobei das Bild Pixel mit Pixelwerten umfasst und der Texel-Wertgenerator **gekennzeichnet ist durch**:

einen Rechner zum adaptiven Berechnen der Stellen einer Vielzahl von Unterteilungspunkten entlang einer Abtastlinie als Funktion eines ausgewählten Texel-Genauigkeitskriteriums; und

einen Approximator (310a), der mit dem Rechner gekoppelt ist, zur Berechnung einer Vielzahl von Texel-Zwischenwerten für eine entsprechende Vielzahl von Pixeln, die zwischen benachbarten Unterteilungspunkten der Abtastlinie angeordnet sind.

**13.** Generator nach Anspruch 12, der des Weiteren ein mit dem Rechner gekoppeltes Speicherelement zum Speichern des ausgewählten Texel-Genauigkeitskriteriums umfasst.

**14.** Generator nach Anspruch 13, wobei das gespeicherte Texel-Genauigkeitskriterium eine Texel-Fehlerschranke ist.

**15.** Generator nach Anspruch 14, wobei die Texel-Fehlerschranke eine Konstante $e$ ist und ein Schritt $t$ zwischen benachbarten Unterteilungspunkten unter Verwendung einer Gleichung-berechnet wird:

$$t = e + 2\sqrt{e\frac{wl}{|dw|}}$$

wobei

$e$ = Fehlerschranke
$w$ = absoluter Wert der Kehrwerte der $w$-Komponenten
und $dw = \frac{wr - wl}{xr - xl}$
wobei $wl = w$ Wert am linken Unterteilungspunkt
und $wr = w$ Wert am benachbarten rechten Unterteilungspunkt.

**16.** Generator nach Anspruch 12, wobei der Approximator (310a) einen Interpolator zum Interpolieren zwischen Texel-Werten der benachbarten Unterteilungspunkte umfasst.

**17.** Generator nach Anspruch 14, wobei der Interpolator ein linearer Interpolator ist.

**18.** Generator nach Anspruch 12, wobei der Rechner einen Teiler umfasst, um Texel-Werte für die Unterteilungspunkte exakt zu berechnen.

**19.** Generator nach Anspruch 12, wobei die Pixelwerte modifiziert werden, indem MIP-Abbildungsniveaus der Texel-Zwischenwerte unter Verwendung einer Gleichung berechnet werden:

$$Niveau = \frac{1}{2}\log_2\left(\left(\frac{du}{dx}\right)^2 + \left(\frac{dv}{dx}\right)^2\right)$$

wobei $u$ und $v$ räumliche Koordinaten sind.

**20.** Computerprogrammprodukt, das ein für Computer verwendbares Medium mit einem darin eingebetteten computerlesbaren Code umfasst, um zu veranlassen, dass Struktur eines Bildes angezeigt wird, wobei das Computerprogrammprodukt **gekennzeichnet ist durch**:

computerlesbaren Code, der so konfiguriert ist, dass er eine Vielzahl von Unterteilungspunkten entlang einer Abtastlinie **durch** Auswahl eines Texel-Genauigkeitskriteriums und Berechnung der Stellen der Unterteilungspunkte, die entlang der Abtastlinie angeordnet sind, als Funktion des ausgewählten Texel-Genauigkeitskriteriums adaptiv auswählt; und

computerlesbaren Code, der so konfiguriert ist, dass er eine erste Vielzahl von Texel-Zwischenwerten für eine erste Vielzahl von Pixeln annähert, die zwischen benachbarten Unterteilungspunkten der Abtastlinie angeordnet sind.

**21.** Computerprogrammprodukt nach Anspruch 20, wobei die Annäherung eine Interpolation ist.

**22.** Computerprogrammprodukt nach Anspruch 21, wobei die Interpolation linear ist.

**23.** Computerprogrammprodukt nach Anspruch 20, wobei das Texel-Genauigkeitskriterium eine Texel-Fehlerschranke ist.

**24.** Computerprogrammprodukt nach Anspruch 22, wobei die Texel-Fehlerschranke eine Konstante $e$ ist und ein Schritt $t$ zwischen benachbarten Unterteilungspunkten unter Verwendung einer Gleichung berechnet wird:

$$t = e + 2\sqrt{e\frac{wl}{|dw|}}$$

wobei

e = Fehlerschranke
$w$ = absoluter Wert der Kehrwerte der $w$-Komponenten
und $dw = \frac{wr - wl}{xr - xl}$
wobei $wl = w$ Wert am linken Unterteilungspunkt
und $wr$ = w Wert am benachbarten rechten Unterteilungspunkt.

**25.** Computerprogrammprodukt nach Anspruch 20, das des Weiteren computerlesbaren Code umfasst, der so konfiguriert ist, dass er eine zweite Vielzahl von Texel-Zwischenwerten für eine zweite Vielzahl von Pixel annähert, die zwischen einem Endpunkt und einem benachbarten Unterteilungspunkt der Abtastlinie angeordnet sind.

**26.** Computerprogrammprodukt nach Anspruch 20, das des Weiteren computerlesbaren Code umfasst, der so konfiguriert ist, dass er eine Vielzahl von Texel-Werten an den Unterteilungspunkten und den Endpunkten der Abtastlinie exakt berechnet.

**27.** Computerprogrammprodukt nach Anspruch 20, das des Weiteren computerlesbaren Code umfasst, der so konfiguriert ist, dass er die Texel-Zwischenwerte verwendet, um die Pixelwerte der Pixel zu modifizieren.

**28.** Computerprogrammprodukt nach Anspruch 27, wobei die Modifikation der Pixelwerte eine Berechnung von MIP-Abbildungsniveauwerten für die Texel-Zwischenwerte unter Verwendung einer Gleichung umfasst:

$$Niveau = \frac{1}{2}\log_2\left(\left(\frac{du}{dx}\right)^2 + \left(\frac{dv}{dx}\right)^2\right)$$

wobei $u$ und $v$ räumliche Koordinaten sind.

**Revendications**

**1.** Procédé d'exploitation d'un système d'infographie (300) qui génère et affiche des images d'objets sur un dispositif d'affichage (380), les images comportant des pixels ayant des valeurs de pixel, le système graphique comportant des éléments pour modifier les images affichées sur le dispositif d'affichage, afin de calculer efficacement des valeurs de texel pour afficher une texture sur un objet donné depuis une perspective donnée, ledit procédé étant **caractérisé par** les étapes de :

sélection adaptative d'une pluralité de points de division entre une paire de points d'extrémité le long de la ligne de balayage (630), ladite étape de sélection adaptative comprenant les étapes de :

sélection d'un critère de précision de texel (442) ; et
calcul des emplacements desdits points de division (444) situés le long de ladite ligne de balayage en fonction dudit critère de précision de texel sélectionné ; et
approximation d'une pluralité de valeurs de texel intermédiaires pour une pluralité correspondante de pixels situés entre des points de division adjacents de la ligne de balayage (630).

**2.** Procédé selon la revendication 1, dans lequel ladite étape d'approximation comporte une étape d'interpolation.

**3.** Procédé selon la revendication 2, dans lequel ladite étape d'interpolation est une étape d'interpolation linéaire.

**4.** Procédé selon la revendication 1, dans lequel ledit critère de précision de texel est une borne d'erreur de texel.

**5.** Procédé selon la revendication 4, dans lequel ladite borne d'erreur de texel est une constante $e$, et une étape $t$ entre des points de division adjacents est calculée en utilisant une équation :

$$t = e + 2\sqrt{e\frac{wl}{|dw|}}$$

où

e = la borne d'erreur
w = la valeur absolue des réciproques des composantes $w$
et $dw = \frac{wr - wl}{xr - xl}$
où $wl$ = la valeur $w$ au point de division gauche
et $wr$ = la valeur $w$ au point de division droit adjacent

**6.** Procédé selon la revendication 1, comprenant en outre les étapes de :

approximation d'une deuxième pluralité de valeurs de texel intermédiaires pour une deuxième pluralité correspondante de pixels situés entre l'un desdits points d'extrémité et un point de division adjacent de ladite ligne de balayage.

**7.** Procédé selon la revendication 6, dans lequel ladite étape d'approximation comporte une étape d'interpolation.

**8.** Procédé selon la revendication 7, dans lequel ladite d'interpolation est une étape d'interpolation linéaire.

**9.** Procédé selon la revendication 1, comprenant en outre l'étape de :

calcul précis d'une pluralité correspondante de valeurs de texel au niveau desdits points de division et desdits points d'extrémité de ladite ligne de balayage.

**10.** Procédé selon la revendication 1, comprenant en outre l'étape d'utilisation desdites valeurs de texel intermédiaires pour modifier lesdites valeurs de pixel desdits pixels.

**11.** Procédé selon la revendication 10, dans lequel ladite modification desdites valeurs de pixel comporte une étape de calcul de valeurs de niveau de carte MIP pour lesdites valeurs de texel intermédiaires en utilisant une équation :

$$niveau = \frac{1}{2}\log_2\left(\left(\frac{du}{dx}\right)^2 + \left(\frac{dv}{dx}\right)^2\right)$$

où $u$ et $v$ sont des coordonnées spatiales.

**12.** Générateur de valeurs de texel adaptatif (310) utilisé dans un système d'infographie (300) pour générer, modifier et afficher une image d'objets sur un dispositif d'affichage (380), l'image comportant des pixels ayant des valeurs de pixel, ledit générateur de valeurs de texel étant **caractérisé par** :

un calculateur pour calculer de manière adaptative les emplacements d'une pluralité de points de division le long d'une ligne de balayage en fonction d'un critère de précision de texel sélectionné ; et
un approximateur (310a) couplé audit calculateur, pour calculer une pluralité de valeurs de texel intermédiaires pour une pluralité correspondante de pixels situés entre des points de division adjacents de ladite ligne de balayage.

**13.** Générateur selon la revendication 12, comprenant en outre un élément de mémoire couplé audit calculateur, pour mémoriser ledit critère de précision de texel sélectionné.

**14.** Générateur selon la revendication 13, dans lequel ledit critère de précision de texel mémorisé est une borne d'erreur de texel.

**15.** Générateur selon la revendication 14, dans lequel ladite borne d'erreur de texel est une constante *e*, et une étape *t* entre des points de division adjacents est calculée en utilisant une équation :

$$t = e + 2\sqrt{e\frac{wl}{|dw|}}$$

où e = la borne d'erreur
w = la valeur absolue des réciproques des composantes *w*
et $dw = \frac{wr - wl}{xr - xl}$
où *wl* = la valeur *w* au point de division gauche
et *wr* = la valeur *w* au point de division droit adjacent

**16.** Générateur selon la revendication 12, dans lequel ledit approximateur (310a) comporte un interpolateur pour interpoler entre des valeurs de texel desdits points de division adjacents.

**17.** Générateur selon la revendication 14, dans lequel ledit interpolateur est un interpolateur linéaire.

**18.** Générateur selon la revendication 12, dans lequel ledit calculateur comporte un diviseur pour calculer avec précision des valeurs de texel desdits points de division.

**19.** Générateur selon la revendication 12, dans lequel lesdites valeurs de pixel sont modifiées en calculant des niveaux de carte MIP desdites valeurs de texel intermédiaires en utilisant une équation :

$$niveau = \frac{1}{2}\log_2\left(\left(\frac{du}{dx}\right)^2 + \left(\frac{dv}{dx}\right)^2\right)$$

où *u* et *v* sont des coordonnées spatiales.

**20.** Produit de programme informatique comportant un support utilisable par ordinateur dans lequel est intégré un code lisible par ordinateur pour entraîner l'affichage de la texture d'une image, le produit de programme informatique étant **caractérisé par**
un code lisible par ordinateur configuré pour sélectionner de manière adaptative une pluralité de points de division le long d'une ligne de balayage en sélectionnant un critère de précision de texel et en calculant les emplacements desdits points de division situés le long de ladite ligne de balayage en fonction dudit critère de précision de texel sélectionné ; et
un code lisible par ordinateur configuré pour approximer une première pluralité de valeurs de texel intermédiaires pour une première pluralité de pixels situés entre des points de division adjacents de ladite ligne de balayage.

**21.** Produit de programme informatique selon la revendication 20, dans lequel ladite approximation est une interpolation.

**22.** Produit de programme informatique selon la revendication 21, dans lequel ladite interpolation est linéaire.

**23.** Produit de programme informatique selon la revendication 20, dans lequel ledit critère de précision de texel est une borne d'erreur de texel.

**24.** Produit de programme informatique selon la revendication 22, dans lequel ladite borne d'erreur de texel est une constante *e*, et une étape *t* entre des points de division adjacents est calculée en utilisant une équation :

$$t = e + 2\sqrt{e\frac{wl}{|dw|}}$$

où e = la borne d'erreur
w = la valeur absolue des réciproques des composantes *w*
et $dw = \frac{wr - wl}{xr - xl}$
où *wl* = la valeur *w* au point de division gauche
et *wr* = la valeur *w* au point de division droit adjacent

25. Produit de programme informatique selon la revendication 20, comprenant en outre un code lisible par ordinateur configuré pour approximer une deuxième pluralité de valeurs de texel intermédiaires pour une deuxième pluralité de pixels situés entre un point d'extrémité et un point de division adjacent de ladite ligne de balayage.

26. Produit de programme informatique selon la revendication 20, comprenant en outre un code lisible par ordinateur configuré pour calculer avec précision une pluralité de valeurs de texel au niveau desdits points de division et desdits points d'extrémité de ladite ligne de balayage.

27. Produit de programme informatique selon la revendication 20, comprenant en outre un code lisible par ordinateur configuré pour utiliser lesdites valeurs de texel intermédiaires pour modifier lesdits valeurs de pixel desdits pixels.

28. Produit de programme informatique selon la revendication 27, dans lequel ladite modification desdites valeurs de pixel comporte un calcul de valeurs de niveau de carte MIP pour lesdites valeurs de texel intermédiaires en utilisant une équation :

$$niveau = \frac{1}{2}\log_2\left(\left(\frac{du}{dx}\right)^2 + \left(\frac{dv}{dx}\right)^2\right)$$

où *u* et *v* sont des coordonnées spatiales.

FIG.1A

FIG.1B

FIG.1C

**FIG.2A**

**FIG.2B**

2000

$(x_1,y_1,z_1,w_1,u_1,v_1)$

$(x_2,y_2,z_2,w_2,u_2,v_2)$

$(x_0,y_0,z_0,w_0,u_0,v_0)$

$(x,y,z,w,u,v)$

$(x_3,y_3,z_3,w_3,u_3,v_3)$

**FIG. 2C**

FIG. 3

EP 0 718 797 B1

START

Adjust end points of scan line to integral pixel locations. — 410

400

Empty span? — 420

Yes

No

Short span? — 430

Yes

No

Adaptively subdivide the span of the scan line. — 440

DONE

**FIG. 4A**

EP 0 718 797 B1

440

START

442
Select a texel accuracy criteria

444
Compute the next integral divisional point along the scan line corresponding to the largest possible subdivision that satisfies the selected accuracy criteria.

446
No — End of span of scan line?

DONE

FIG. 4B

33

**FIG. 5**

600

START

Compute accurate texel value(s) at the end point(s) 610

Compute accurate texel value(s) at the integral divisional point(s) of the scan line 620

Approximate the texel values for pixels located between adjacent end points and divisional point(s) 630

DONE

FIG. 6